# EUROPEAN PATENT SPECIFICATION

(11) **EP 4 274 376 B1**
(45) Date of publication and mention of the grant of the patent: **07.10.2026**
(21) Application number: 21928173.0
(22) Date of filing: 09.04.2021
(51) Int. Cl.: H05B 6/06, H05B 6/12, H02M 7/44

(54) **INDUCTION-HEATING-TYPE COOKTOP**
INDUKTIONSKOCHFELD
TABLE DE CUISSON DE TYPE À CHAUFFAGE PAR INDUCTION

(30) Priority: 23.02.2021 KR 20210023908
(43) Date of publication of application: 08.11.2023
(73) Proprietor: LG Electronics Inc., Yeongdeungpo-gu Seoul 07336 (KR)
(72) Inventor: MOON, Hyunwook, Seoul 08592 (KR); JUNG, Kyunghoon, Seoul 08592 (KR); LEE, Jaewoo, Seoul 08592 (KR); KIM, Yangkyeong, Seoul 08592 (KR)
(74) Representative: Vossius & Partner Patentanwälte Rechtsanwälte mbB
(86) International application number: PCT/KR2021/004468
(87) International publication number: WO 2022/181877

(56) References cited:
- EP-A1- 3 307 017
- JP-A- 2007 250 503
- KR-A- 20200 073 114
- KR-B1- 0 151 289
- KR-B1- 0 176 838
- KR-B1- 100 214 614
- US-A1- 2003 164 373

## Description

### TECHNICAL FIELD

The present disclosure relates to an induction heating-type cooktop, and more particularly, to an induction heating-type cooktop capable of heating both a magnetic substance and a non-magnetic substance.

### BACKGROUND ART

Various types of cooking appliances are used to heat food at home or in the restaurant. According to the related art, a gas stove using gas as a fuel has been widely used. However, recently, devices for heating an object to be heated, for example, a cooking container such as a pot, have been spread using electricity instead of the gas.

A method for heating the object to be heated using electricity is largely divided into a resistance heating method and an induction heating method. The electrical resistance method is a method for heating an object to be heated by transferring heat generated when electric current flows through a metal resistance wire or a non-metal heating body such as silicon carbide to the object to be heated (e.g., a cooking container) through radiation or conduction. In the induction heating method, when high-frequency power having a predetermined intensity is applied to a coil, eddy current is generated in the object to be heated using magnetic fields generated around the coil so that the object to be heated is heated.

In the case of such an induction heating method, there is a problem in that output power varies depending on a material of a cooking container even when the same current is applied to a coil. Specifically, a non-magnetic container has smaller specific resistance in the same operating frequency band due to lower permeability than that of a magnetic container, and thus an output of the non-magnetic container is less than that of the magnetic container.

Thus, a method for improving an output of not only the magnetic container but also the non-magnetic container is required. That is, a cooktop capable of heating both the magnetic container and the non-magnetic container at a high output is required.

Japanese Patent Registration No. 4978059, which is a prior art document, discloses a structure in which a short/open changing means is controlled so that composite capacitance of a resonance capacitor becomes small when a low-resistance non-magnetic metal is heated. However, since the composite inductance is fixed in the cooktop according to the above-mentioned prior art document, there is a problem in that the working coil has to be designed based on either a magnetic container or a non-magnetic container. As an example, it is assumed that the working coil is designed based on the magnetic container, the composite inductance is designed to have a relatively small value for a high output. Here, there is a problem in that a non-magnetic container having very low coupling resistance requires a considerably large resonance current in order to be heated at the high output.

KR 2020 0073114 A (SAMSUNG ELECTRONICS CO LTD [KR]) 23 June 2020 (2020-06-23) describes an induction heating cooker that can be used with both magnetic and non-magnetic materials.

KR 0 151 289 B1 (LG ELECTRONICS INC.) 15 December 1998 (1998-12-15) describes a control method for an induction heating cooker that enables zero voltage switching (ZVS) regardless of the material of the induction load by setting the initial switching operating frequency to a frequency suitable for heating a non-magnetic induction load.

### DISCLOSURE OF THE INVENTION

### TECHNICAL PROBLEM

An object of the present disclosure is to solve the above problems.

An object of the present disclosure is to provide a cooktop capable of heating both a magnetic container and a non-magnetic container at a high output.

An object of the present disclosure is to provide a cooktop that is capable of adjusting both composite capacitance and composite inductance while sharing a resonance network.

An object of the present disclosure is to provide a cooktop capable of securing a higher withstand voltage when heating a non-magnetic container than when heating a magnetic container.

### TECHNICAL SOLUTION

A cooktop according to the present invention is defined by claim 1, and is designed to control composite capacitance as well as composite inductance by sharing a resonance network regardless of the type of cooking container.

A cooktop according to the present disclosure includes a plurality of switches connecting at least one working coil to at least one resonance capacitor according to the type of cooking container.

A cooktop according to the present disclosure is designed so that a resonance capacitor is variable in a serial connection or series-parallel structure according to the type of cooking container.

### ADVANTAGEOUS EFFECTS

According to the present disclosure, since both the composite capacitance and the composite inductance are adjusted according to the type of cooking container, there may be the advantage in not supplying the excessively large resonance current to the working coil.

According to the present disclosure, since the resonance network is shared, the increase in volume of the cooktop and the increase in unit cost of the element may be minimized when compared to the case in which the independently driven resonance network is provided.

According to the present disclosure, since the large resonance current is distributed through a plurality of switches, there may be the advantage in that the high specifications for each switch are not required.

According to the present disclosure, since the withstand voltage when heating a non-magnetic container is secured about twice as high as the withstand voltage when heating the magnetic container, there may be the advantage in that the stability of the product increases.

### BRIEF DESCRIPTION OF THE DRAWINGS

FIG. 1 is a perspective view illustrating a cooktop and a cooking container according to an embodiment of the present disclosure.
FIG. 2 is a cross-sectional view illustrating the cooktop and the cooking container according to an embodiment of the present disclosure.
FIG. 3 is a circuit diagram of the cooktop according to an embodiment of the present disclosure.
FIG. 4 is a view illustrating output characteristics of the cooktop according to an embodiment of the present disclosure.
FIGS. 5 to 6 are circuit diagrams illustrating a working coil module and a resonance capacitor module of the cooktop according to an embodiment of the present disclosure.
FIGS. 7 to 9 are circuit diagrams illustrating a working coil module and a resonance capacitor module of a cooktop according to another embodiment of the present disclosure.

### MODE FOR CARRYING OUT THE INVENTION

Hereinafter, embodiments relating to the present disclosure will be described in detail with reference to the accompanying drawings. Furthermore, terms, such as a "module" ad a "unit", are used for convenience of description, and they do not have different meanings or functions in themselves.

Hereinafter, an induction heating type cooktop and an operation method thereof according to an embodiment of the present disclosure will be described. For convenience of description, the "induction heating type cooktop" is referred to as a "cooktop".

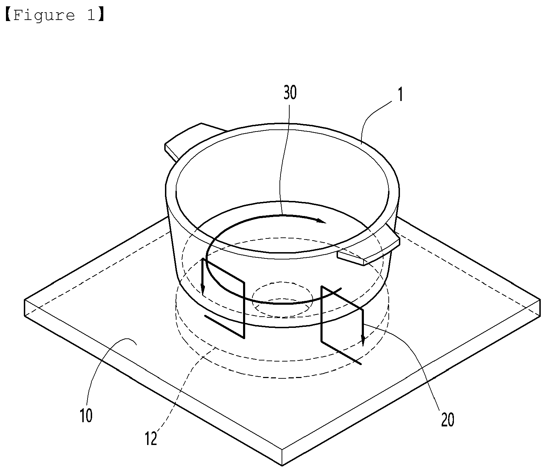

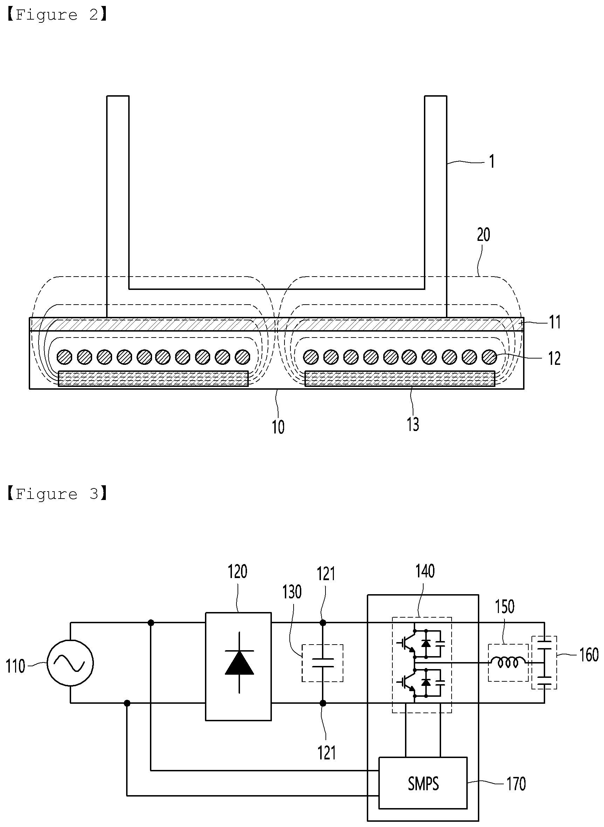

FIG. 1 is a perspective view illustrating a cooktop and a cooking container according to an embodiment of the present disclosure, and FIG. 2 is a cross-sectional view illustrating the cooktop and the cooking container according to an embodiment of the present disclosure.

A cooking container 1 may be disposed above the cooktop 10, and the cooktop 10 may heat a cooking container 1 disposed thereon.

First, a method for heating the cooking container 1 using the cooktop 10 will be described.

As illustrated in FIG. 1, the cooktop 10 may generate a magnetic field 20 so that at least a portion of the magnetic field 20 passes through the cooking container 1. Here, if an electrical resistance component is contained in a material of the cooking container 1, the magnetic field 20 may induce an eddy current 30 in the cooking container 1. Since the eddy current 30 generates heat in the cooking container 1 itself, and the heat is conducted or radiated up to the inside of the cooking container 1, contents of the cooking container 1 may be cooked.

When the material of the cooking container 1 does not contain the electrical resistance component, the eddy current 30 does not occur. Thus, in this case, the cooktop 10 may not heat the cooking container 1.

As a result, the cooking container 1 capable of being heated by the cooktop 10 may be a stainless steel container or a metal container such as an enamel or cast iron container.

Next, a method for generating the magnetic field 20 by the cooktop 10 will be described.

As illustrated in FIG. 2, the cooktop 10 may include at least one of an upper plate glass 11, a working coil 12, or a ferrite 13.

The upper plate glass 11 may support the cooking container 1. That is, the cooking container 1 may be placed on a top surface of the upper plate glass 11.

In addition, the upper plate glass 11 may be made of ceramic tempered glass obtained by synthesizing various mineral materials. Thus, the upper plate glass 11 may protect the cooktop 10 from an external impact.

In addition, the upper plate glass 11 may prevent foreign substances such as dust from being introduced into the cooktop 10.

The working coil 12 may be disposed below the upper plate glass 11. Current may or may not be supplied to the working coil 12 to generate the magnetic field 20. Specifically, the current may or may not flow through the working coil 12 according to on/off of an internal switching element of the cooktop 10.

When the current flows through the working coil 12, the magnetic field 20 may be generated, and the magnetic field 20 may generate the eddy current 30 by meeting the electrical resistance component contained in the cooking container 1. The eddy current may heat the cooking container 1, and thus, the contents of the cooking container 1 may be cooked.

In addition, heating power of the cooktop 10 may be adjusted according to an amount of current flowing through the working coil 12. As a specific example, as the current flowing through the working coil 12 increases, the magnetic field 20 may be generated more, and thus, since the magnetic field passing through the cooking container 1 increases, the heating power of the cooktop 10 may increase.

The ferrite 13 is a component for protecting an internal circuit of the cooktop 10. Specifically, the ferrite 13 serves as a shield to block an influence of the magnetic field 20 generated from the working coil 12 or an electromagnetic field generated from the outside on the internal circuit of the cooktop 10.

For this, the ferrite 13 may be made of a material having very high permeability. The ferrite 13 serves to induce the magnetic field introduced into the cooktop 10 to flow through the ferrite 13 without being radiated. The movement of the magnetic field 20 generated in the working coil 12 by the ferrite 13 may be as illustrated in FIG. 2.

The cooktop 10 may further include components other than the upper glass 11, the working coil 12, and the ferrite 13 described above. For example, the cooktop 10 may further include an insulator (not shown) disposed between the upper plate glass 11 and the working coil 12. That is, the cooktop according to the present disclosure is not limited to the cooktop 10 illustrated in FIG. 2.

FIG. 3 is a circuit diagram of the cooktop according to an embodiment of the present disclosure.

Since the circuit diagram of the cooktop 10 illustrated in FIG. 3 is merely illustrative for convenience of description, the embodiment of the present disclosure is not limited thereto.

Referring to FIG. 3, the induction heating type cooktop may include at least some or all of a power supply 110, a rectifier 120, a DC link capacitor 130, an inverter 140, a working coil 150, a resonance capacitor 160, and an SMPS 170.

The power supply 110 may receive external power. Power received from the outside to the power supply 110 may be alternation current (AC) power.

The power supply 110 may supply an AC voltage to the rectifier 120.

The rectifier 120 is an electrical device for converting alternating current into direct current. The rectifier 120 converts the AC voltage supplied through the power supply 110 into a DC voltage. The rectifier 120 may supply the converted voltage to both DC ends 121.

An output terminal of the rectifier 120 may be connected to both the DC ends 121. Each of both the ends 121 of the DC output through the rectifier 120 may be referred to as a DC link. A voltage measured at each of both the DC ends 121 is referred to as a DC link voltage.

A DC link capacitor 130 serves as a buffer between the power supply 110 and the inverter 140. Specifically, the DC link capacitor 130 is used to maintain the DC link voltage converted through the rectifier 120 to supply the DC link voltage to the inverter 140.

The inverter 140 serves to switch the voltage applied to the working coil 150 so that high-frequency current flows through the working coil 150. The inverter 140 may include a semiconductor switch, and the semiconductor switch may be an insulated gate bipolar transistor (IGBT) or an SiC element. Since this is merely an example, the embodiment is not limited thereto. The inverter 140 drives the semiconductor switch to allow the high-frequency current to flow in the working coil 150, and thus, high-frequency magnetic fields are generated in the working coil 150.

In the working coil 150, current may or may not flow depending on whether the switching element is driven. When current flows through the working coil 150, magnetic fields are generated. The working coil 150 may heat an cooking appliance by generating the magnetic fields as the current flows.

One side of the working coil 150 is connected to a connection point of the switching element of the inverter 140, and the other side is connected to the resonance capacitor 160.

The switching element is driven by a driver (not shown), and a high-frequency voltage is applied to the working coil 150 while the switching element operates alternately by controlling a switching time output from the driver. In addition, since a turn on/off time of the switching element applied from the driver (not shown) is controlled in a manner that is gradually compensated, the voltage supplied to the working coil 150 is converted from a low voltage into a high voltage.

The resonance capacitor 160 may be a component to serve as a buffer. The resonance capacitor 160 controls a saturation voltage increasing rate during the turn-off of the switching element to affect an energy loss during the turn-off time.

The SMPS 170 (switching mode power supply) refers to a power supply that efficiently converts power according to a switching operation. The SMPS 170 converts a DC input voltage into a voltage that is in the form of a square wave and then obtains a controlled DC output voltage through a filter. The SMPS 170 may minimize an unnecessary loss by controlling a flow of the power using a switching processor.

In the case of the cooktop 10 expressed by the circuit diagram illustrated in FIG. 3, a resonance frequency is determined by an inductance value of the working coil 150 and a capacitance value of the resonance capacitor 160. Then, a resonance curve may be formed around the determined resonance frequency, and the resonance curve may represent output power of the cooktop 10 according to a frequency band.

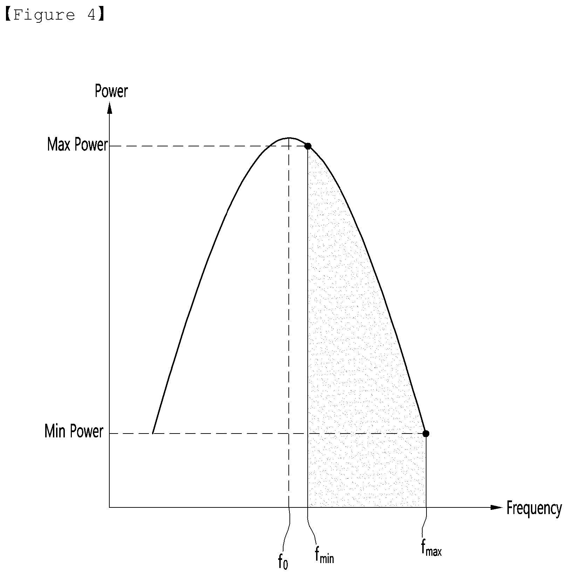

Next, FIG. 4 is a view illustrating output characteristics of the cooktop according to an embodiment of the present disclosure.

First, a Q factor (quality factor) may be a value representing sharpness of resonance in the resonance circuit. Therefore, in the case of the cooktop 10, the Q factor is determined by the inductance value of the working coil 150 included in the cooktop 10 and the capacitance value of the resonance capacitor 160. The resonance curve may be different depending on the Q factor. Thus, the cooktop 10 has different output characteristics according to the inductance value of the working coil 150 and the capacitance value of the resonance capacitor 160.

FIG. 4 illustrates an example of the resonance curve according to the Q factor. In general, the larger the Q factor, the sharper the shape of the curve, and the smaller the Q factor, the broader the shape of the curve.

A horizontal axis of the resonance curve may represent a frequency, and a vertical axis may represent output power. A frequency at which maximum power is output in the resonance curve is referred to as a resonance frequency f0.

In general, the cooktop 10 uses a frequency in a right region based on the resonance frequency f0 of the resonance curve. In addition, the cooktop 1 may have a minimum operating frequency and a maximum operating frequency, which are set in advance.

For example, the cooktop 10 may operate at a frequency corresponding to a range from the maximum operating frequency fmax to the minimum operating frequency fmin. That is, the operating frequency range of the cooktop 10 may be from the maximum operating frequency fmax to the minimum operating frequency fmin.

For example, the maximum operating frequency fmax may be an IGBT maximum switching frequency. The IGBT maximum switching frequency may mean a maximum driving frequency in consideration of a resistance voltage and capacity of the IGBT switching element. For example, the maximum operating frequency fmax may be 75 kHz.

The minimum operating frequency fmin may be about 20 kHz. In this case, since the cooktop 10 does not operate at an audible frequency (about 16 Hz to 20 kHz), noise of the cooktop 10 may be reduced.

Since setting values of the above-described maximum operating frequency fmax and minimum operating frequency fmin are only examples, the embodiment of the present disclosure is not limited thereto.

When receiving a heating command, the cooktop 10 may determine an operating frequency according to a heating power level set by the heating command. Specifically, the cooktop 10 may adjust the output power by decreasing in operating frequency as the set heating power level is higher and increasing in operating frequency as the set heating power level is lower. That is, when receiving the heating command, the cooktop 10 may perform a heating mode in which the cooktop operates in one of the operating frequency ranges according to the set heating power.

An output of the cooktop 10 may vary according to the type of cooking container even if the set heating level is the same. For example, even if the heating level set in the cooktop 10 is the same, the output when the cooking container is made of the magnetic substance may be higher than the output when the cooking container is made of the non-magnetic substance.

In order to solve this problem, the cooktop 10 may adjust the composite capacitance of the resonance capacitor according to the type of cooking container.

In particular, the cooktop 10 according to an embodiment of the present disclosure intends to adjust the composite inductance together with the composite capacitance according to the type of cooking container. Here, a resonance network of the cooktop 10 may be designed to be shared, that is, to always resonate at least one working coil and at least one resonance capacitor regardless of the type of cooking container.

For this, the cooktop 10 according to an embodiment of the present disclosure may include a working coil module including a plurality of working coils and a resonance capacitor module including a plurality of resonance capacitors. In addition, current may selectively flow through some of the plurality of working coils and some of the plurality of resonance capacitors according to the type of the cooking container 1.

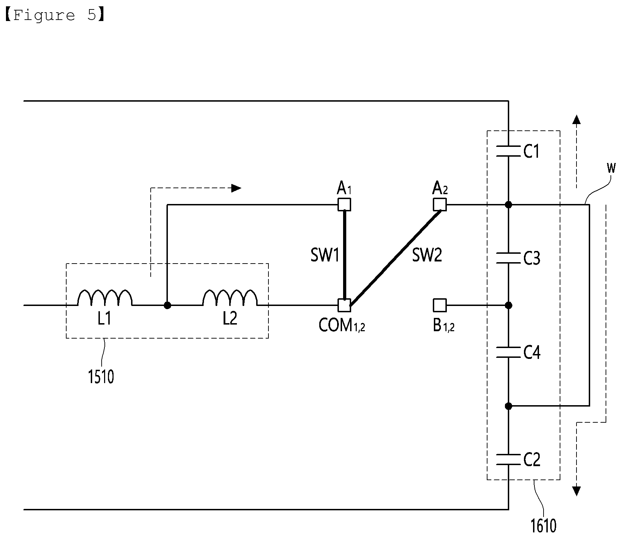

FIGS. 5 to 6 are circuit diagrams illustrating the working coil module and the resonance capacitor module of the cooktop according to an embodiment of the present disclosure.

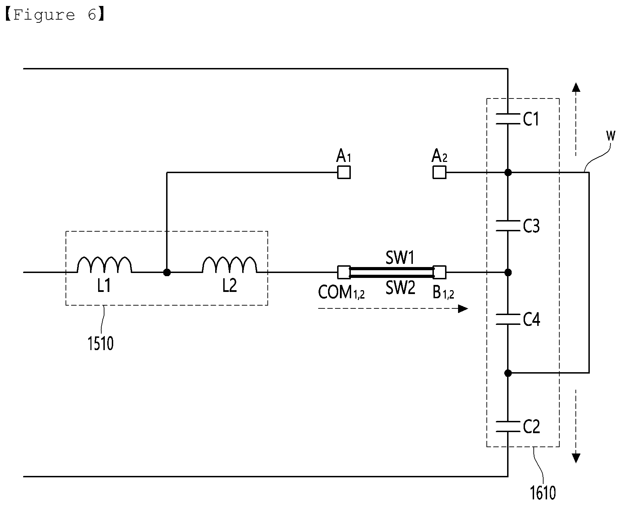

An arrow expressed by dotted line shown in FIGS. 5 and 6 may indicate current.

The cooktop 10 according to an embodiment of the present disclosure may include the working coil module 1510 instead of the working coil 150 described in FIG. 3 and a resonance capacitor module 1610 instead of the resonance capacitor 160 described in FIG. 3.

The working coil module 1510 may include a plurality of working coils 150 described in FIG. 3. In FIG. 5, the working coil module 1510 is illustrated as including first and second working coils L1 and L2, but since the number of working coils is merely an example, it is reasonable not to be limited thereto.

The resonance capacitor module 1610 may include a plurality of resonance capacitors 160 described in FIG. 3. Similarly, although the resonance capacitor module 1610 in FIG. 5 is illustrated as including first to fourth resonance capacitors C1, C2, C3, and C4, the number of resonance capacitors is merely an example and is limited thereto.

The first and second working coils L1 and L2 may generate a magnetic field so that the cooking container 1 is heated. The inverter 140 may supply current to at least one of the first and second working coils L1 and L2.

The resonance capacitor module 1610 may include first resonance capacitor modules C1 and C2 and second resonance capacitor modules C3 and C4, the first resonance capacitor module may include first and second resonance capacitors C1 and C2, and the second resonance capacitor module may include third and fourth resonance capacitors C3 and C4. Here, both the number of resonance capacitors constituting the first resonance capacitor modules and the number of resonance capacitors constituting the second resonance capacitor modules are merely examples, but are not limited thereto.

The first and second resonance capacitor modules may resonate with at least some or all of the first and second working coils L1 and L2.

As illustrated in FIGS. 5 and 6, current may selectively flow through the second working coil L2 and the second resonance capacitor module. In more detail, current may selectively flow through the second working coil L2 and the second resonance capacitor module according to the type of cooking container. For example, when the cooking container 1 is made of the magnetic substance, the current may not flow through the second working coil L2 and the second resonance capacitor modules C3 and C4, and when the cooking container 1 is made of the non-magnetic substance, the current may flow through the second working coil L2 and the second resonance capacitor modules C3 and C4.

FIG. 5 illustrates a structure of a resonance network formed when the cooking container 1 is made of the magnetic substance, and FIG. 6 may illustrates a structure of a resonance network formed when the cooking container 1 is made of the non-magnetic substance.

When the cooking container 1 is made of the magnetic substance, as illustrated in FIG. 5, the current may flow through the first working coil L1 and the first resonance capacitor modules C1 and C2. That is, the current may pass through the first working coil L1 and be distributed to the first resonance capacitor C1 and the second resonance capacitor C2.

When the cooking container 1 is made of the non-magnetic substance, as illustrated in FIG. 6, the current may flow through the first and second working coils L1 and L2 and the first and second resonance capacitor modules C1, C2, C3, and C4. That is, the current may be distributed in a direction of the first and third resonance capacitors C1 and C3 and a direction of the second and fourth resonance capacitors C2 and C4 via the first and second working coils L1 and L2.

For this, the third resonance capacitor C3 and the fourth resonance capacitor C4 may be disposed between the first resonance capacitor C1 and the second resonance capacitor C2, and the cooktop 10 may include a conducting wire w having one end connected between the first resonance capacitor C1 and the third resonance capacitor C3 and the other end connected between the second resonance capacitor C2 and the fourth resonance capacitor C4.

The conducting wire w may be a bypass path that prevents current from passing through the third and fourth resonance capacitors C3 and C4 when the cooking container 1 is made of the magnetic substance. That is, the conducting wire w may guide the current passing through the first working coil L1 to the second resonance capacitor C2 when the cooking container 1 is made of the magnetic substance. The current may selectively flow through the wire w according to the type of the cooking container 1.

In addition, the cooktop 10 may include a first switch SW1 and a second switch SW2, which are driven so that the current selectively flows through the second working coil L2 and the second resonance capacitor modules C3 and C4 according to the type of the cooking container 1.

Each of the first and second switches SW1 and SW2 may be automatically driven according to the type of cooking container. For example, each of the first and second switches SW1 and SW2 is driven so that a common terminal is connected to a terminal A when the cooking container 1 is made of the magnetic substance, and the common terminal is connected to a terminal B when the cooking container 1 is made of the non-magnetic substance.

Specifically, in the first switch SW1, the common terminal may be connected to the second working coil L2, the terminal A may be connected between the first working coil L1 and the second working coil L2, and the terminal B may be connected between the third resonance capacitor C3 and the fourth resonance capacitor C4. In the second switch SW2, the common terminal may be connected to the second working coil L2, the terminal A may be connected between the first resonance capacitor C1 and a third resonance capacitor C3, and the terminal B may be connected between the third resonance capacitor C3 and the fourth resonance capacitor C4. Reference numerals COM_{1,2} illustrated in FIGS. 5 and 6 may indicate the common terminal of the first switch SW1 and the common terminal of the second switch SW2, reference numeral A₁ may indicate the terminal A of the first switch SW1, reference numeral A₂ may indicate the terminal A of the second switch SW2, and reference numerals B_{1,2} may indicate the terminal B of the first switch SW1 and the terminal B of the second switch SW2.

As in the present disclosure, when the cooktop 10 includes the plurality of switches driven so that the current selectively flows through the second working coil L2 and the second resonance capacitor module according to the type of the cooking container 1, since the resonance current is distributed to the plurality of switches, there may be an advantage in that high specifications for each switch are not required. That is, there is an advantage in that allowable current required for each switch when the cooktop 10 includes the plurality of switches is less than that required for the switch when the cooktop 10 includes one switch.

The switches SW1 and SW2 may be mechanically driven relay switches or electrically driven IGBTs or SiC. For example, the switches SW1 and SW2 may be relay single pole double through (SPDT).

When the cooking container 1 is made of the magnetic substance, the first and second switches SW1 and SW2 may be driven so that the common terminal and the terminal A are connected to each other. Specifically, when the cooking container 1 is made of the magnetic substance, the common terminal of the first and second switches SW1 and SW2 may operate in a first mode connected to the terminal A. Thus, the current passing through the first working coil L1 may flow through the first resonance capacitor C1 and the second resonance capacitor C2, which are connected in parallel to each other.

When the cooking container 1 is made of the non-magnetic substance, the first and second switches SW1 and SW2 may be driven so that the common terminal and the terminal B are connected, respectively. Specifically, when the cooking container 1 is made of the non-magnetic substance, the common terminals of the first and second switches SW1 and SW2 may operate in a second mode connected to the terminal B. Thus, the current passing through the first and second working coils L1 and L2 may flow through the first resonance capacitor module and the second resonance capacitor module, which are connected in parallel to each other, that is, the first to fourth resonance capacitors C1, C2, C3, and C4. Here, since the first resonance capacitor C1 and the third resonance capacitor C3 are connected in series, and the second resonance capacitor C2 and the fourth resonance capacitor C4 are connected in series, there is an advantage in that the withstand voltage is doubled.

In addition, the composite capacitor when the common terminal of the first and second switches SW1 and SW2 is connected to the terminal A has a value greater than the composite capacitance when the common terminal of the first and second switches SW1 and SW2 is connected to the terminal B. For example, in FIGS. 5 and 6, when it is assumed that the inductance of the first working coil L1 is L1, the inductance of the second working coil L2 is L2, and the capacitance of each of the first to fourth resonant capacitors C1, C2, C3, and C4 is X, if the cooking vessel 1 is made of the magnetic substance, the composite inductance may be L1, and the composite capacitance may be 2X, and if the cooking vessel 1 is made of the non-magnetic substance, the composite inductance may be L1+L2, and the composite capacitance may be X. That is, the composite inductance when heating the magnetic substance is less than the composite inductance when heating the non-magnetic substance, and the composite capacitance when heating the magnetic substance is greater than the composite capacitance when heating the non-magnetic substance.

Thus, since all of the composite capacitance and composite inductance of the cooktop 10 are adjusted according to the type of the cooking container, there is an advantage in that a large output is possible regardless of the type of the cooking container 1. In addition, when the cooktop 10 heats the non-magnetic cooking container 1, the composite capacitance may decrease, and a phase margin may be secured. However, since the first and third resonance capacitors C1 and C3 are connected in series, and the second and fourth resonance capacitors C2 and C4 are connected in series, the withstand voltage may increase. In addition, the resonance current when the cooking container 1 is made of the non-magnetic substance may be about 1/2 of the resonance current when the cooking container 1 is made of the magnetic substance.

As described above, in the cooktop 10 according to an embodiment of the present disclosure, when the cooking container 1 is made of the magnetic substance, the first working coil L1 may resonates with the first and second resonance capacitors C1 and C2, and when the cooking container 1 is made of the non-magnetic substance, the first and second working coils L1 and L2 may resonate with the first to fourth resonance capacitors C1, C2, C3, and C4. Thus, it may be confirmed that the working coil L1 and the first and second resonance capacitors C1 and C2 resonate regardless of the type of cooking container 1. That is, when compared to a case in which the cooktop 1 includes the working coil and the resonance capacitor that always resonate regardless of the type of cooking container 1, and thus, the resonance network is independently driven according to the type of cooking container 1, there is an advantage of minimizing an increase in volume of the cooktop and an increase in component price.

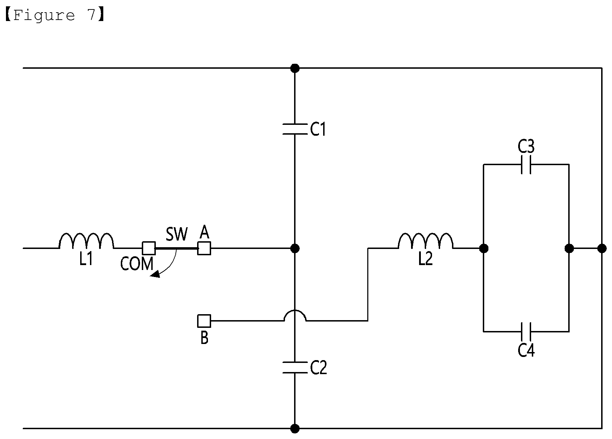

FIGS. 7 to 9 are circuit diagrams illustrating a working coil module and a resonance capacitor module of a cooktop according to another embodiment of the present disclosure.

That is, each embodiment illustrated in FIGS. 7 to 9 may represent an embodiment that is capable of being substituted for the circuit diagrams illustrated in FIGS. 5 to 6 described above.

According to the embodiment illustrated in FIG. 7, a cooktop 10 may include first and second working coils L1 and L2, first to fourth resonance capacitors C1, C2, C3, and C4, and a switch SW. In the switch SW, a common terminal COM may be connected to the first working coil L1, an A terminal A may be connected to a contact point of the first resonance capacitor C1 and the second resonance capacitor C2, and a B terminal B may be connected to the second working coil L2. The capacitance of each of the first and second resonance capacitors C1 and C2 may be Y, and the capacitance of each of the third and fourth resonance capacitors C3 and C4 may be X.

Therefore, in the cooktop 10, when the cooking container 1 is made of a magnetic substance, the first working coil L1 and the first and second resonance capacitors C1 and C2 resonate, and the cooking container 1 is made of a non-magnetic substance, the first and second working coils L1 and L2 and the third and fourth resonance capacitors C3 and C4 may resonate.

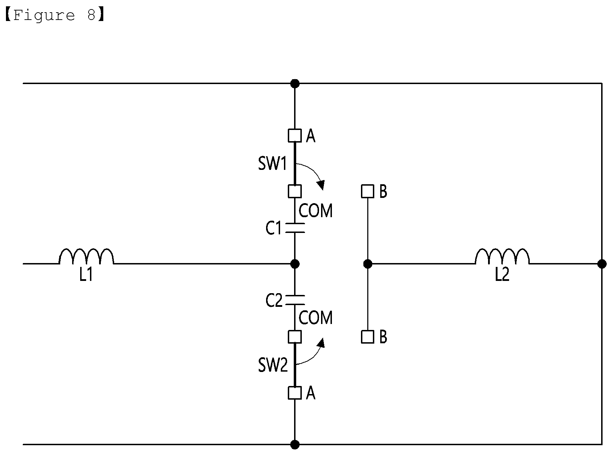

According to the embodiment illustrated in FIG. 8, the cooktop 10 may include first and second working coils L1 and L2, first and second resonance capacitors C1 and C2, and first and second switches SW1 and SW2. In the first switch SW1, a common terminal COM may be connected to the first resonance capacitor C1, an A terminal A may be connected to DC both ends 121, a B terminal B may be connected to a second working coil L2, and in the second switch SW2, a common terminal COM may be connected to a second resonance capacitor C2, and an A terminal A may be connected to DC both ends 121, and a B terminal B may be connected to the second working coil L2. In addition, the first working coil L1 may be connected to a contact point of the first resonance capacitor C1 and the second resonance capacitor C2, and the second working coil L2 may be connected to a contact point of the B terminal B of the first switch SW1 and the B terminal B of the second switch SW2.

Therefore, in the cooktop 10, when the cooking container 1 is made of a magnetic substance, the first working coil L1 and the first and second resonance capacitors C1 and C2 resonate, and the cooking container 1 is made of a non-magnetic substance, the first and second working coils L1 and L2 and the first and second resonance capacitors C1 and C2 may resonate.

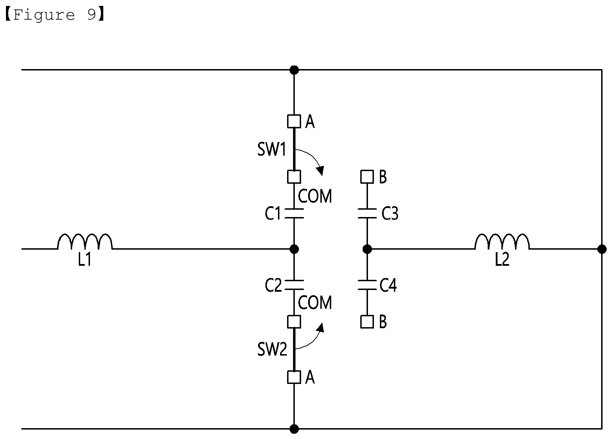

According to the embodiment illustrated in FIG. 9, the cooktop 10 may include first and second working coils L1 and L2, first to fourth resonance capacitors C1, C2, C3, and C4, and first and second switches SW1 and SW2. In the first switch SW1, a common terminal COM may be connected to the first resonance capacitor C1, an A terminal A may be connected to DC both ends 121, a B terminal B may be connected to a third resonance capacitor C3, and in the second switch SW2, a common terminal COM may be connected to a second resonance capacitor C2, and an A terminal A may be connected to DC both ends 121, and a B terminal B may be connected to the fourth resonance capacitor C4. In addition, the first working coil L1 may be connected to a contact point of the first resonance capacitor C1 and the second resonance capacitor C2, and the second working coil L2 may be connected to a contact point of the third resonance capacitor C3 and the fourth resonance capacitor C4.

Therefore, in the cooktop 10, when the cooking container 1 is made of a magnetic substance, the first working coil L1 and the first and second resonance capacitors C1 and C2 resonate, and the cooking container 1 is made of a non-magnetic substance, the first and second working coils L1 and L2 and the first and fourth resonance capacitors C1, C2, C3, and C4 may resonate.

The above-disclosed subject matter is to be considered illustrative, and not restrictive, and the appended claims are intended to cover all such modifications, enhancements, and other embodiments, which fall within the scope of said claims.

## Claims

1. An induction heating type cooktop comprising:
a first working coil (L1) and a second working coil (L2) configured to generate a magnetic field so that a cooking container (1) is heated;
an inverter (140) configured to supply current to at least one of the first working coil (L1) or the second working coil (L2); and
a first resonance capacitor module (C1, C2) and a second resonance capacitor module (C3, C4) configured to resonate with the first working coil (L1) and the second working coil (L2);
**characterized in that** the first resonance capacitor module (C1, C2) comprises a first resonance capacitor (C1) and a second resonance capacitor (C2),
the second resonance capacitor module (C3, C4) comprises a third resonance capacitor (C3) and a fourth resonance capacitor (C4) disposed between the first resonance capacitor (C1) and the second resonance capacitor (C2), and
the induction heating type cooktop further comprises a wire (w) having one end connected between the first resonance capacitor (C1) and the third resonance capacitor (C3) and the other end connected between the second resonance capacitor and (C2) the fourth resonance capacitor (C4).

2. The induction heating type cooktop according to claim 1, wherein the induction heating type cooktop is configured such that:
when the cooking container (1) is made of a magnetic substance, the current flows through the first working coil (L1) and the first resonance capacitor module (C1, C2) and does not flow through the second working coil (L2) and the second resonance capacitor module (C3, C4), and
when the cooking container is made of a non-magnetic substance, the current flows through the first and second working coils (L1, L2) and the first and second resonance capacitor modules (C1, C2, C3, C4).

3. The induction heating type cooktop according to claim 2, further comprising a first switch (SW1) and a second switch (SW2), which are configured to be driven so that the current selectively flows through the second working coil (L1) and the second resonance capacitor module (C3, C4) according to types of cooking container.

4. The induction heating type cooktop according to claim 3, wherein, in the first switch:
a common terminal is connected to the second working coil (L2),
a terminal A is connected between the first working coil (L1) and the second working coil (L2), and
a terminal B is connected between the third resonance capacitor (C3) and the fourth resonance capacitor (C4); and
in the second switch (SW2):
a common terminal is connected to the second working coil (L2),
a terminal A is connected between the first resonance capacitor (C1) and the third resonance capacitor (C3), and
a terminal B is connected between the third resonance capacitor (C3) and the fourth resonance capacitor C4.

5. The induction heating type cooktop according to claim 4, wherein, when the cooking container (1) is made of a magnetic substance, each of the first and second switches (SW1, SW2) is configured to be driven so that the common terminal and the terminal A are connected to each other, and
the current flows through the first resonance capacitor module (C1, C2) and the second resonance capacitor module (C3, C4), which are connected in parallel to each other.

6. The induction heating type cooktop according to claim 5, wherein, when the cooking container (1) is made of a non-magnetic substance, the first and second switches (SW1,SW2) are configured to be driven so that the common terminal and the terminal B are connected to each other, and
the current flows through the first resonance capacitor module (C1, C2) and the second resonance capacitor module (C3, C4), which are connected in parallel to each other.

7. The induction heating type cooktop according to claim 6, wherein a composite capacitance, when the common terminal of each of the first and second switches (SW1, SW2) is connected to the terminal A, is greater than a composite capacitance, when the common terminal of each of the first and second switches (SW1, SW2) is connected to the terminal B.

## Patentansprüche

1. Induktionskochfeld, das aufweist:
eine erste Arbeitsspule (L1) und eine zweite Arbeitsspule (L2), die konfiguriert sind, ein Magnetfeld zu erzeugen, so dass ein Kochbehälter (1) erwärmt wird;
einen Wechselrichter (140), der konfiguriert ist, Strom an mindestens eine der ersten Arbeitsspule (L1) oder der zweiten Arbeitsspule (L2) zu liefern; und
ein erstes Resonanzkondensatormodul (C1, C2) und ein zweites Resonanzkondensatormodul (C3, C4), die konfiguriert sind, mit der ersten Arbeitsspule (L1) und der zweiten Arbeitsspule (L2) in Resonanz zu treten;
**dadurch gekennzeichnet, dass** das erste Resonanzkondensatormodul (C1, C2) einen ersten Resonanzkondensator (C1) und einen zweiten Resonanzkondensator (C2) aufweist,
das zweite Resonanzkondensatormodul (C3, C4) einen dritten Resonanzkondensator (C3) und einen vierten Resonanzkondensator (C4) aufweist, die zwischen dem ersten Resonanzkondensator (C1) und dem zweiten Resonanzkondensator (C2) angeordnet sind, und
das Induktionskochfeld ferner einen Draht (w) aufweist, dessen eines Ende zwischen dem ersten Resonanzkondensator (C1) und dem dritten Resonanzkondensator (C3) angeschlossen ist und dessen anderes Ende zwischen dem zweiten Resonanzkondensator (C2) und dem vierten Resonanzkondensator (C4) angeschlossen ist.

2. Induktionskochfeld nach Anspruch 1, wobei das Induktionskochfeld derart konfiguriert ist, dass:
wenn der Kochbehälter (1) aus einem magnetischen Material besteht, der Strom durch die erste Arbeitsspule (L1) und das erste Resonanzkondensatormodul (C1, C2) fließt und nicht durch die zweite Arbeitsspule (L2) und das zweite Resonanzkondensatormodul (C3, C4) fließt, und
wenn der Kochbehälter aus einem nichtmagnetischen Material besteht, der Strom durch die erste und die zweite Arbeitsspule (L1, L2) und durch das erste und das zweite Resonanzkondensatormodul (C1, C2, C3, C4) fließt.

3. Induktionskochfeld nach Anspruch 2, das ferner einen ersten Schalter (SW1) und einen zweiten Schalter (SW2) aufweist, die konfiguriert sind, so angesteuert zu werden, dass der Strom entsprechend der Art des Kochbehälters selektiv durch die zweite Arbeitsspule (L1) und das zweite Resonanzkondensatormodul (C3, C4) fließt.

4. Induktionskochfeld nach Anspruch 3, wobei im ersten Schalter:
ein gemeinsamer Anschluss mit der zweiten Arbeitsspule (L2) verbunden ist,
ein Anschluss A zwischen der ersten Arbeitsspule (L1) und der zweiten Arbeitsspule (L2) angeschlossen ist und
ein Anschluss B zwischen dem dritten Resonanzkondensator (C3) und dem vierten Resonanzkondensator (C4) angeschlossen ist; und
im zweiten Schalter (SW2):
ein gemeinsamer Anschluss mit der zweiten Arbeitsspule (L2) verbunden ist,
ein Anschluss A zwischen dem ersten Resonanzkondensator (C1) und dem dritten Resonanzkondensator (C3) angeschlossen ist und
ein Anschluss B zwischen dem dritten Resonanzkondensator (C3) und dem vierten Resonanzkondensator (C4) angeschlossen ist.

5. Induktionskochfeld nach Anspruch 4, wobei, wenn der Kochbehälter (1) aus einem magnetischen Material besteht, jeweils der erste und der zweite Schalter (SW1, SW2) konfiguriert sind, so angesteuert zu werden, dass der gemeinsame Anschluss und der Anschluss A miteinander verbunden sind, und
der Strom durch das erste Resonanzkondensatormodul (C1, C2) und das zweite Resonanzkondensatormodul (C3, C4) fließt, die parallel zueinander geschaltet sind.

6. Induktionskochfeld nach Anspruch 5, wobei, wenn der Kochbehälter (1) aus einem nichtmagnetischen Material besteht, der erste und der zweite Schalter (SW1, SW2) konfiguriert sind, so angesteuert zu werden, dass der gemeinsame Anschluss und der Anschluss B miteinander verbunden sind, und
der Strom durch das erste Resonanzkondensatormodul (C1, C2) und das zweite Resonanzkondensatormodul (C3, C4) fließt, die parallel zueinander geschaltet sind.

7. Induktionskochfeld nach Anspruch 6, wobei eine zusammengesetzte Kapazität, wenn der gemeinsame Anschluss jeweils des ersten und zweiten Schalters (SW1, SW2) mit dem Anschluss A verbunden ist, größer ist als eine zusammengesetzte Kapazität, wenn der gemeinsame Anschluss jedes der ersten und zweiten Schalter (SW1, SW2) mit dem Anschluss B verbunden ist.

## Revendications

1. Table de cuisson de type à chauffage par induction comprenant :
une première bobine de travail (L1) et une deuxième bobine de travail (L2) configurées pour générer un champ magnétique de manière à chauffer un récipient de cuisson (1) ;
un onduleur (140) configuré pour fournir du courant à au moins l'une parmi la première bobine de travail (L1) et la deuxième bobine de travail (L2) ; et
un premier module de condensateurs de résonance (C1, C2) et un deuxième module de condensateurs de résonance (C3, C4) configurés pour résonner avec la première bobine de travail (L1) et la deuxième bobine de travail (L2) ;
**caractérisée en ce que** le premier module de condensateurs de résonance (C1, C2) comprend un premier condensateur de résonance (C1) et un deuxième condensateur de résonance (C2),
le deuxième module de condensateurs de résonance (C3, C4) comprend un troisième condensateur de résonance (C3) et un quatrième condensateur de résonance (C4) disposés entre le premier condensateur de résonance (C1) et le deuxième condensateur de résonance (C2), et
la table de cuisson de type à chauffage par induction comprend en outre un fil (w) dont une extrémité est connectée entre le premier condensateur de résonance (C1) et le troisième condensateur de résonance (C3) et dont l'autre extrémité est connectée entre le deuxième condensateur de résonance (C2) et le quatrième condensateur de résonance (C4).

2. Table de cuisson de type à chauffage par induction selon la revendication 1, dans laquelle la table de cuisson de type à chauffage par induction est configurée de telle sorte que :
lorsque le récipient de cuisson (1) est constitué d'une substance magnétique, le courant circule à travers la première bobine de travail (L1) et le premier module de condensateurs de résonance (C1, C2) et ne circule pas à travers la deuxième bobine de travail (L2) et le deuxième module de condensateurs de résonance (C3, C4), et
lorsque le récipient de cuisson est constitué d'un matériau non magnétique, le courant circule à travers les première et deuxième bobines de travail (L1, L2) et les premier et deuxième modules de condensateurs de résonance (C1, C2, C3, C4).

3. Table de cuisson de type à chauffage par induction selon la revendication 2, comprenant en outre un premier commutateur (SW1) et un deuxième commutateur (SW2), qui sont configurés pour être actionnés de telle sorte que le courant circule de manière sélective à travers la deuxième bobine de travail (L1) et le deuxième module de condensateurs de résonance (C3, C4) en fonction des types de récipients de cuisson.

4. Table de cuisson de type à chauffage par induction selon la revendication 3, dans laquelle, dans le premier commutateur :
une borne commune est connectée à la deuxième bobine de travail (L2),
une borne A est connectée entre la première bobine de travail (L1) et la deuxième bobine de travail (L2), et
une borne B est connectée entre le troisième condensateur de résonance (C3) et le quatrième condensateur de résonance (C4) ; et
dans le deuxième commutateur (SW2) :
une borne commune est connectée à la deuxième bobine de travail (L2),
une borne A est connectée entre le premier condensateur de résonance (C1) et le troisième condensateur de résonance (C3), et
une borne B est connectée entre le troisième condensateur de résonance (C3) et le quatrième condensateur de résonance (C4).

5. Table de cuisson de type à chauffage par induction selon la revendication 4, dans laquelle, lorsque le récipient de cuisson (1) est constitué d'un matériau magnétique, chacun des premier et deuxième commutateurs (SW1, SW2) est configuré pour être commandé de telle sorte que la borne commune et la borne A soient reliées l'une à l'autre, et
le courant circule à travers le premier module de condensateurs de résonance (C1, C2) et le deuxième module de condensateurs de résonance (C3, C4), qui sont connectés en parallèle l'un à l'autre.

6. Table de cuisson de type à chauffage par induction selon la revendication 5, dans laquelle, lorsque le récipient de cuisson (1) est constitué d'un matériau non magnétique, les premier et deuxième commutateurs (SW1, SW2) sont configurés pour être actionnés de telle sorte que la borne commune et la borne B soient reliées entre elles, et
le courant circule à travers le premier module de condensateurs de résonance (C1, C2) et
le deuxième module de condensateurs de résonance (C3, C4), qui sont connectés en parallèle l'un à l'autre.

7. Table de cuisson de type à chauffage par induction selon la revendication 6, dans laquelle une capacité composite, lorsque la borne commune de chacun des premier et deuxième commutateurs (SW1, SW2) est connectée à la borne A, est supérieure à une capacité composite, lorsque la borne commune de chacun des premier et deuxième commutateurs (SW1, SW2) est connectée à la borne B.
